# EUROPÄISCHE PATENTANMELDUNG

(11) **EP 4 789 527 A1**
(43) Veröffentlichungstag der Anmeldung: **12.08.2026**
(21) Anmeldenummer: 26154917.4
(22) Anmeldetag: 29.01.2026
(51) Int. Cl.: A01D 34/82, A01D 69/08, A01D 75/18, F16D 27/01, F16D 27/112, H02K 11/25

(54) **SCHNITTWERKZEUGANTRIEB FÜR RASENMÄHER**

(30) Priorität: 11.02.2025 DE 202025100677 U
(71) Anmelder: AL-KO Production Austria GmbH, 8742 Obdach (AT)
(72) Erfinder: Kempfle, Thomas, 89346 Bibertal (DE); Vogel, Markus, 89359 Kötz (DE); Kränzle, Bernhard, 89415 Lauingen (DE); Hendler, René, 8046 Stattegg (AT); Wagner, Thomas, 89346 Bibertal (DE); Grünwald, Ralph Felix, 89568 Hermaringen (DE)
(74) Vertreter: ERNICKE Patent- und Rechtsanwälte PartmbB

(57) **Zusammenfassung**

Die vorliegende Offenbarung betrifft eine Antriebstechnik für ein Rasenschnittwerkzeug eines Rasenmähers, insbesondere einen Schnittwerkzeugantrieb (3) und ein Magnetkupplung-Anschlusskabel. Der Schnittwerkzeugantrieb (3) ist für ein Rasenschnittwerkzeug (2) eines Rasenmähers (1) vorgesehen und ausgebildet. Er umfasst eine Kupplung, die als eine elektrisch aktuierbare Magnetkupplung (20) ausgebildet ist. Der Schnittwerkzeugantrieb umfasst weiterhin (3) eine Thermoabsicherung (40), die bei Eintreten eines Überhitzungszustands die elektrische Aktuierung der Magnetkupplung aufhebt. Alternativ oder zusätzlich kann das Magnetkupplung-Anschlusskabel (30) eine Thermoabsicherung (40) umfassen, die bei Eintreten eines Überhitzungszustands die elektrische Aktuierung der Magnetkupplung aufhebt.

## Beschreibung

In der Praxis ist es bekannt, ein Rasenbearbeitungswerkzeug eines Rasenmähers über einen motorischen Antrieb zu betreiben. Der motorische Antrieb ist in der Regel mittels eines Getriebes mit dem Rasenbearbeitungswerkzeug drehmomentleitend verbunden und kann etwaig über eine Kupplung aktiviert werden.

Es hat sich gezeigt, dass parasitäre Einwirkungen am Rasenbearbeitungswerkzeug dazu führen können, dass in der Kraftleitung zwischen dem motorischen Antrieb und dem Rasenbearbeitungswerkzeug ein hoher Schlupf auftritt. Dieser Schlupf kann zu Fehlfunktionen an der Kupplung und/oder am Getriebe führen. Beispielsweise kann das zu schnelle Schneiden von hohem und/oder feuchtem Gras, etwaig in Kombination mit einer verstopften oder überlasteten Schnittgutabnahme, zu einem vollständigen Blockieren oder einer stark herabgesetzten Betriebsgeschwindigkeit des Rasenschnittwerkzeugs führen. In einem ungünstigen Fall kann die Kupplung in einen Blockadezustand geraten, in dem sie dauerhaft geöffnet, oder dauerhaft geschlossen ist und ihre Schaltfähigkeit verliert. Dies kann zu einer Beschädigung an weiteren Bauteilen führen, einschließlich einer Überlastung oder Zerstörung des motorischen Antriebs, was weitere Risiken bedingen kann.

Aus JP S61 - 139 140 U ist eine elektromagnetische Kupplung für den Werkzeugantrieb eines Kombinationsernters bekannt. Es kann eine Trennung der Kraftübertragung der Kupplung erfolgen. Die Kupplung kann durch manuelle Bedienung geöffnet oder geschlossen werden mittels eines Hauptschalters und eines Zwangsbetriebsschalters in einem Bedienbereich, auf den der Erntefacharbeiter Zugriff hat, einem Leistungsrelais und einer Zylinderspule. Ein Infrarot-basierter Ferntemperatursensor erfasst die in der Nähe der Kupplung entstehende Wärme. Die erfasste Wärme kann ein Temperaturrelais aktivieren, welches eine Anzeige an den Erntefacharbeiter ausgibt.

Aus US 4 570 766 A ist ein magnetischer Kupplungs- und Bremsmechanismus für eine Antriebsrotorbaugruppe zum Antreiben von Rasenmäherklingenelementen eines Rasenmähers bekannt.

Es ist Aufgabe der vorliegenden Erfindung, eine verbesserte Antriebstechnik für ein Rasenbearbeitungswerkzeug eines Rasenmähers aufzuzeigen. Die Erfindung löst diese Aufgabe durch die Merkmale der eigenständigen Ansprüche.

Die offenbarungsgemäße Antriebstechnik kann einen Schnittwerkzeugantrieb für ein Rasenschnittwerkzeug eines Rasenmähers, ein Rasenschnittwerkzeug mit dem Schnittwerkzeugantrieb, einen mit dem Schnittwerkzeugantrieb ausgestatteten Rasenmäher sowie ein Magnetkupplung-Anschlusskabel umfassen. Das Anschlusskabel ist bevorzugt ein elektrisch leitendes Kabel, insbesondere ein Magnetkupplung-Elektroanschlusskabel. Das Kabel kann ein Stromversorgungskabel und/oder ein Steuerstromkabel sein.

Durch die offenbarte Antriebstechnik werden verschiedene Vorteile erreicht oder unterstützt. Ein unzulässig hoher Schlupf und ein damit einhergehender Überhitzungszustand an der Kupplung kann festgestellt werden und die Drehmomentleitung kann in einem solchen Fall unterbrochen werden, sodass (weitere) Beschädigungen an der Kupplung oder eine Beeinträchtigung des motorischen Antriebs verhindert werden. Die Kupplung kann gegebenenfalls durch Nachrüstung eines Anschlusskabels bei einem Bestand zur Bildung der offenbarungsgemäßen Antriebstechnik ergänzt werden. Die Kupplung kann als eine elektrisch aktuierbare Magnetkupplung mit einer vollständig automatisch wirkenden Überhitzungserkennung funktionieren. Etwaig kann bei einem Wegfall eines Überhitzungszustands ein Rücksetzen (manuell und/oder automatisch) ermöglicht sein, um wieder in den Normalbetrieb des Schnittwerkzeugantriebs überzugehen.

Ein Schnittwerkzeugantrieb gemäß der vorliegenden Offenbarung ist für ein Rasenschnittwerkzeug eines Rasenmähers vorgesehen und ausgebildet. Der Schnittwerkzeugantrieb umfasst eine Kupplung, die als eine elektrisch aktuierbare Magnetkupplung ausgebildet ist. Er umfasst weiterhin eine Thermoabsicherung, die bei Eintreten eines Überhitzungszustands die elektrische Aktuierung der Magnetkupplung aufhebt. Der Schnittwerkzeugantrieb kann zusätzlich auch eine oder mehrere weitere Thermoabsicherungen umfassen. Das Aufheben der elektrischen Aktuierung bewirkt bevorzugt eine Trennung der drehmomentleitenden Wirkung des Schnittwerkzeugantriebs. Insbesondere wird ein Rasenschnittwerkzeug von einem motorischen Antrieb entkoppelt. Dies kann der Ursache eines Überhitzungszustands entgegenwirken. Der Nutzer des Rasenmähers wird in der Regel die Unterbrechung feststellen und hierdurch oder etwaig durch eine zusätzliche Warnanzeige, die bevorzugt bei der Aktivierung der Thermoabsicherung auslösbar sein kann, auf einen Fehlerzustand hingewiesen. Der Nutzer kann daraufhin etwaig die mechanische Ursache für das Auftreten von Schlupf im Schnittwerkzeugantrieb beheben, beispielsweise die Schnittvorgaben des Rasenmähers ändern und/oder eine Schnittgutabfuhr räumen.

Ein Magnetkupplung-Anschlusskabel gemäß der vorliegenden Offenbarung ist zur elektrischen Stromversorgung einer Magnetkupplung eines Schnittwerkzeugantriebs für einen Rasenmäher vorgesehen und ausgebildet. Das Magnetkupplung-Anschlusskabel kann eine Thermoabsicherung umfassen, die bei Eintreten eines Überhitzungszustands die elektrische Aktuierung der Magnetkupplung aufhebt. Das Magnetkupplung-Anschlusskabel kann zusätzlich auch eine oder mehrere weitere Thermoabsicherungen umfassen.

Das Magnetkupplung-Anschlusskabel kann für eine oder bevorzugt für mehrere Typen von Magnetkupplungen nutzbar sein. Es kann somit eine modulare Nachrüstung eines bestehenden Schnittwerkzeugantriebs unterstützen.

In den Unteransprüchen und der nachfolgenden Zeichnungsbeschreibung sind weitere vorteilhafte Ausbildungen der Offenbarung angegeben.
Die Erfindung ist in den Zeichnungen beispielhaft und schematisch dargestellt. Diese zeigen:
- Figur 1:: einen Rasenmäher mit einem Rasenschnittwerkzeug;
- Figur 2:: einen Schnittwerkzeugantrieb gemäß der vorliegenden Offenbarung in einer beispielhaften Ausführung;
- Figuren 3 und 4:: eine Magnetkupplung mit einer Thermoabsicherung in einer ersten Ausführungsvariante in einer Übersichtsdarstellung sowie einer Detailansicht eines elektrischen Anschlusses;
- Figuren 5 und 6:: Darstellungen analog zu Figuren 3 und 4 für eine zweite Ausführungsvariante;
- Figuren 7 und 8:: eine dritte Ausführungsvariante;
- Figuren 9 und 10:: eine vierte Ausführungsvariante;
- Figuren 11 und 12:: eine fünfte Ausführungsvariante.

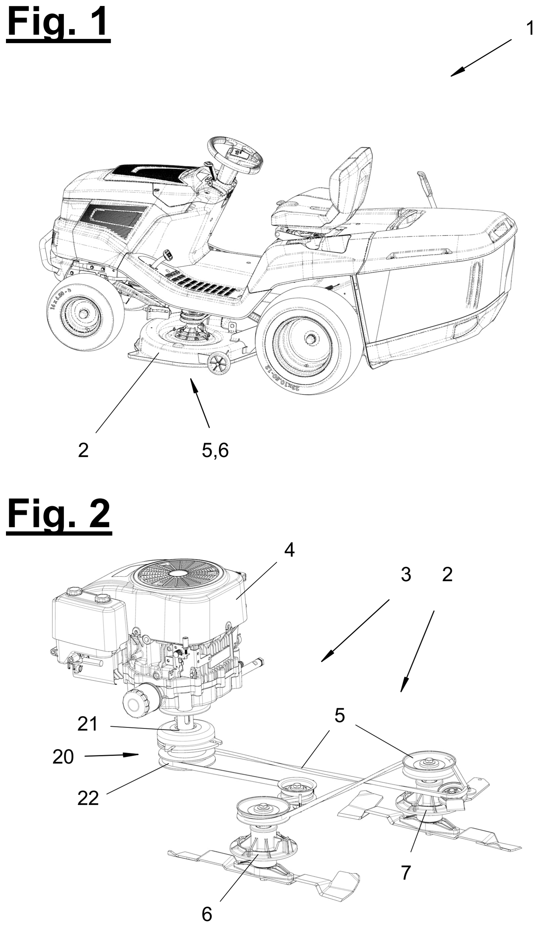

Figur 1 zeigt einen Rasenmäher 1 in einer beispielhaften Ausführung. Der Rasenmäher 1 kann eine beliebige Bauart haben. Er kann beispielsweise als ein Aufsitzmäher, ein Mähtraktor oder ein Walk-Behind-Rasenmäher ausgebildet sein. Der Rasenmäher 1 kann weiterhin als ein Rasenmähroboter ausgebildet sein oder durch ein multifunktionales Landfahrzeug mit einem angeflanschten Rasen-Schnittwerkzeug gebildet sein. In dem Beispiel von Figur 1 ist ein Aufsitzmäher gezeigt.

Figur 2 illustriert einen Schnittwerkzeugantrieb 3 für ein Rasenschnittwerkzeug 2. Das Rasenschnittwerkzeug 2 ist in den Figuren beispielhaft als eine permanente Ausstattung des Rasenmähers 1 aus Figur 1 gezeigt. Das Rasenschnittwerkzeug 2 kann eine beliebige Ausbildung haben. Es kann insbesondere über ein, zwei oder mehr Schneidwerke 6,7 verfügen. Ein Schneidwerk 6,7 und/oder das Rasenschnittwerkzeug kann eine permanente oder eine temporäre Komponente des Schnittwerkzeugantriebs 3 bzw. des Rasenmähers 1 sein. Sie kann etwaig durch eine andere Komponente, wie beispielsweise ein Vertikutierwerkzeug oder ein sonstiges geeignetes Bodenbearbeitungswerkzeug austauschbar sein.

Der Schnittwerkzeugantrieb 3 umfasst eine Kupplung, die als eine elektrisch aktuierbare Magnetkupplung 20 ausgebildet ist.

Die Magnetkupplung 20 kann eine Drehmomentübertragung zwischen einem Antriebselement 21 der Magnetkupplung und einem Abtriebselement 22 der Magnetkupplung schalten oder steuern. Bevorzugt kann das Antriebselement 21 eingangsseitig mit dem motorischen Antrieb 4 eines Rasenmähers 1 verbindbar oder verbunden sein. Alternativ oder zusätzlich kann das Abtriebselement 22 ausgangsseitig drehmomentleitend mit dem Rasenschnittwerkzeug 2 oder einer der genannten alternativen Bodenbearbeitungswerkzeuge verbindbar oder verbunden sein.

Die ausgangsseitige Verbindung kann direkt oder indirekt, insbesondere über ein Getriebe vorgesehen sein. Das Getriebe kann bevorzugt ein Bestandteil des Schnittwerkzeugantriebs 3 und/oder ein Bestandteil des Rasenschnittwerkzeugs 2 sein. Das Getriebe kann eine beliebige Ausbildung haben. Das Getriebe kann beispielsweise ein Zahnradgetriebe umfassen oder sein. Alternativ oder zusätzlich kann das Getriebe ein umlaufendes Zugmittel umfassen oder durch ein umlaufendes Zugmittel gebildet sein. Das umlaufende Zugmittel kann beispielsweise ein Riemen oder eine Kette sein. Mit anderen Worten kann das Getriebe einen Kettentrieb und/oder einen Riementrieb umfassen. In dem gezeigten Beispiel ist das Getriebe als ein Riementrieb 5 ausgebildet. Der Riementrieb kann mit einer Riemenscheibe am Abtriebselement 22 der Magnetkupplung 20 treibend verbunden sein und über optionale Riemenumlenkungen mit mindestens einer Riemenscheibe an einem Schneidwerk 6,7 verbunden sein. Die Riemen kann reibschlüssig drehmomentleitend sein, beispielsweise in der Ausbildung als ein Keilriemen. Er kann alternativ formschlüssig drehmomentleitend sein, beispielsweise in der Ausbildung als ein Zahnriemen. Mit anderen Worten kann ein kraftschlüssiger oder formschlüssiger Riementrieb 5 vorgesehen sein.

Die Magnetkupplung 20 kann eine beliebige Ausbildung und Funktionsweise haben. Gemäß einer bevorzugten Ausführung bewirkt die Magnetkupplung die Drehmomentübertragung, wenn und/oder solange die elektrische Aktuierung der Magnetkupplung 20 aktiv ist. Alternativ oder zusätzlich kann die Magnetkupplung 20 die Drehmomentübertragung unterbinden, wenn und/oder solange die elektrische Aktuierung inaktiv ist.

Die Magnetkupplung 20 kann bevorzugt eine erste Kupplungseinheit, insbesondere eine erste Kupplungsscheibe umfassen, die mit dem Antriebselement 21 (drehfest) verbunden ist, und eine zweite Kupplungseinheit, insbesondere eine zweite Kupplungsscheibe, die mit dem Abtriebselement 22, insbesondere einer Riemenscheibe, (drehfest) verbunden ist. Bevorzugt sind die Kupplungseinheiten, insbesondere Kupplungsscheiben, durch die elektrische Aktuierung miteinander in Eingriff bringbar. Alternativ zu den Kupplungsscheiben können Kupplungsklauen vorgesehen sein.

Der Überhitzungszustand kann beliebig definiert sein. Bevorzugt handelt es sich um einen Überhitzungszustand der Magnetkupplung. Alternativ oder zusätzlich kann ein Überhitzungszustand des Getriebes erfasst sein, insbesondere ein Überhitzungszustand eines Getriebeelementes, das ausgangsseitig mit der Magnetkupplung 20 verbunden ist, weiter insbesondere ein Überhitzungszustand der Riemenscheibe.

Der Überhitzungszustand kann insbesondere eintreten, wenn eine Temperatur der Magnetkupplung, weiter insbesondere eine AnschlussTemperatur oder eine Gehäusetemperatur oder eine Abtriebselementtemperatur der Magnetkupplung einen vordefinierten Temperaturgrenzwert erreicht oder überschreitet. Nachfolgend wird beispielhaft und repräsentativ davon ausgegangen, dass die Thermoabsicherung auf einen Überhitzungszustand der Magnetkupplung reagiert, der insbesondere eintritt, wenn eine Temperatur der Magnetkupplung, weiter insbesondere eine Anschluss-Temperatur an einem elektrischen Anschluss der Magnetkupplung, einen vordefinierten Temperaturgrenzwert überschreitet.

Die Thermoabsicherung 40 umfasst bevorzugt einen temperatursensiblen Abschnitt 40a, durch den insbesondere das Überschreiten eines vordefinierten Temperaturgrenzwerts feststellbar ist. Die Thermoabsicherung 40 kann weiterhin einen elektrisch trennenden Abschnitt 40b umfassen, durch den eine elektrische Aktuierung der Magnetkupplung aufhebbar ist. Ferner kann eine Thermoabsicherung 40 optional einen rücksetzenden Abschnitt 40c aufweisen, durch den die Aufhebungswirkung auf die elektrische Aktuierung revidierbar ist, sodass insbesondere die elektrische Aktuierung der Magnetkupplung wieder in gewohnter Weise über eine Stromversorgung stattfinden kann.

Die Stromversorgung der Magnetkupplung (20) kann auf beliebige Weise erfolgen oder ausgebildet sein. Bevorzugt kann ein Laststrom über eine erste Leitung (31) und eine zweite Leitung (32) eines Anschlusskabels (30) übertragen werden. Der Laststrom kann auf beliebige Weise bereitgestellt sein und insbesondere eine extern zugeführte Stromversorgung bilden. Wenn der Laststrom anliegt, kann die Stromversorgung aktiv sein. Wenn der Laststrom (durch externe Mittel) abgeschaltet ist oder wird, kann die Stromversorgung unterbrochen sein.

Ein temperatursensibler Abschnitt 40a, ein elektrisch trennender Abschnitt 40b und/oder ein rücksetzender Abschnitt 40c können jeweils einzeln oder mehrfach vorhanden sein. Zwei oder alle drei Abschnitte können in einer einzigen Bauteilkomponente kombiniert oder auf mehrere Bauteilkomponente verteilt sein. Weiter unten werden verschiedene mögliche Ausführungsvarianten und Verteilungen beispielhaft erläutert. Deren Ausbildungsmerkmale können in beliebiger Weise miteinander kombiniert werden.

Die Thermoabsicherung 40 kann an einer beliebigen Stelle angeordnet sein. Sie kann vollständig, insbesondere mit allen Bauteilkomponenten, oder zumindest teilweise, also nur mit einem Teil der Bauteilkomponenten, gemäß einer der nachfolgenden Anordnungsvarianten angeordnet oder auf zwei oder drei der Varianten verteilt sein.

Bevorzugt kann die Thermoabsicherung zumindest teilweise an einem elektrischen Anschluss 23 der Magnetkupplung 20 angeordnet sein. Weiter bevorzugt kann die Thermoabsicherung zumindest teilweise in eine Anschlussbuchse 24 der Magnetkupplung 20 integriert sein. Alternativ oder zusätzlich kann die Thermoabsicherung bevorzugt zumindest teilweise in einem Steckelement 25,25' eines Anschlusskabels 30 der Magnetkupplung integriert sein. Alternativ oder zusätzlich kann die Thermoabsicherung zumindest teilweise in ein Adapter-Element 34 integriert sein, das insbesondere zwischen einer Anschlussbuchse 24 der Magnetkupplung 20 und einem Anschlusskabel 30 anordenbar oder angeordnet ist.

Eine zumindest teilweise Anordnung schließt gemäß der vorliegenden Offenbarung auch eine vollständige Anordnung ein. Eine Anordnung zwischen einer Anschlussbuchse 24 und einem Anschlusskabel 30 kann eine räumliche Zwischen-Anordnung und/oder eine im Hinblick auf die elektrische Verschaltung Zwischen-Anordnung sein.

Alternativ oder zusätzlich kann die Thermoabsicherung 40 zumindest teilweise an einer Aufnahme des Gehäuses der Magnetkupplung 20 angeordnet sein, insbesondere an einer Befestigungsaufnahme 26. Eine bevorzugte Ausführung sieht vor, dass ein temperatursensibler Abschnitt 40a mehrfach vorhanden ist, wobei ein erster temperatursensibler Abschnitt 40a an einem elektrischen Anschluss 23 der Magnetkupplung 20 und mindestens ein weiterer temperatursensibler Abschnitt 40a an einer Aufnahme des Gehäuses der Magnetkupplung 20 angeordnet ist.

Die Thermoabsicherung 40 kann ausschließlich eine Aufhebungswirkung für die elektrische Aktuierung der Magnetkupplung 20 haben. Alternativ kann die Thermoabsicherung 40 zusätzlich eine Rücksetzwirkung haben.

Die Thermoabsicherung 40 kann nach Eintritt eines Überhitzungszustands bevorzugt dauerhaft die elektrische Aktuierung unterbinden. Insbesondere kann dies durch eine permanente Zustandsänderung der Thermoabsicherung eintreten, weiter insbesondere durch eine zumindest teilweise Zerstörung eines Schutzelements 41. Das Schutzelement 41 kann beliebig ausgebildet sein. Es kann eine (eigene) Sicherung, insbesondere Schmelzsicherung 43 der Thermoabsicherung 40 sein. Alternativ oder zusätzlich kann ein Schutzelement 41 eine (gegebenenfalls externe) elektrische Überlastsicherung 46 sein. Eine Überlastsicherung 46 kann Bestandteil eines Anschlusskabels 30 und/oder Bestandteil einer Magnetkupplung 20 und/oder Bestandteil eines Rasenmähers 1 sein.

Die Thermoabsicherung 40 kann nach Eintritt eines Überhitzungszustands etwaig temporär die elektrische Aktuierung unterbinden, wobei die Thermoabsicherung 40 insbesondere durch manuelle Betätigung eines Rücksetzelements 42 rücksetzbar ist. Die Rücksetzbarkeit, insbesondere die manuelle Rücksetzbarkeit, kann von mindestens einem weiteren Zulassungskriterium abhängig sein. Mit anderen Worten kann eine Rücksetzung verhindert oder ausgeschlossen sein, wenn und/oder solange, zumindest ein Zulassungskriterium für das Rücksetzen nicht erfüllt ist. Ein solches Zulassungskriterium kann auf beliebige Weise und durch beliebige Feststellungsmittel prüfbar sein.

Ein erstes Zulassungskriterium kann sein, dass ein Wegfall des Überhitzungszustands vorliegt. Mit anderen Worten kann ein Rücksetzen, insbesondere ein Rücksetzen durch manuelle Betätigung eines Rücksetzelements 42, ausschließlich nach dem Wegfall des Überhitzungszustands zugelassen sein und/oder wirksam werden.

Alternativ oder zusätzlich kann ein Zulassungskriterium eine externe Unterbrechung der Stromversorgung für die Magnetkupplung 20 sein. Mit anderen Worten kann eine Rücksetzung, insbesondere durch manuelle Betätigung eines Rücksetzelements, ausschließlich zugelassen sein oder wirksam werden, wenn und/oder sobald eine externe Stromversorgung der Magnetkupplung 20 (zusätzlich zu der Aufhebungswirkung durch die Thermoabsicherung) unterbrochen wird.

Die Thermoabsicherung kann nach Eintritt des Überhitzungszustands gegebenenfalls temporär die elektrische Aktuierung unterbinden, wobei sich die Thermoabsicherung 40 insbesondere eigenständig zurücksetzt, weiter insbesondere nach Wegfall des Überhitzungszustands. Die Rücksetzung kann auch in diesem Fall von denselben oder weiteren Zulassungskriterien abhängig sein, die bereits erläutert worden sind.

Alternativ oder zusätzlich kann eine eigenständige Rücksetzung auf eine bestimmte Anzahl an Wiederholungen (der eigenständigen Rücksetzung) beschränkt sein. Wenn und/oder sobald die beschränkte Anzahl an Wiederholungen erreicht ist, kann gegebenenfalls ausschließlich eine Rücksetzung durch manuelle Betätigung zugelassen sein.

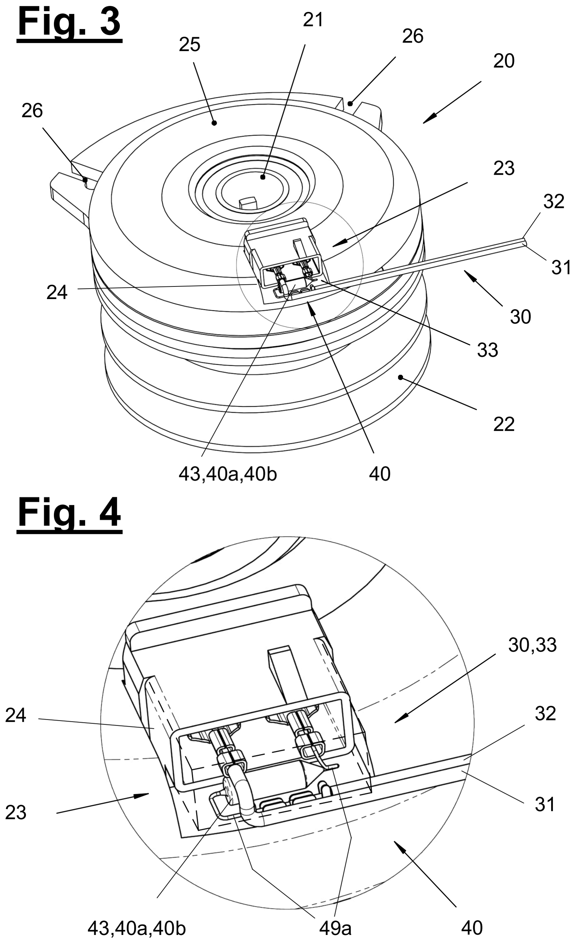

Figuren 3-12 zeigen beispielhafte Ausführungsvarianten einer Magnetkupplung 20 und einer Thermoabsicherung 40. In allen gezeigten Beispielen sind Änderungen der Anordnung der Thermoabsicherung gemäß den obigen Ausführungen von der Offenbarung mit abgedeckt. Insbesondere können ein temperatursensibler Abschnitt 40a und/oder ein elektrisch trennender Abschnitt 40b und/oder ein rücksetzender Abschnitt 40c nach Belieben ergänzt und/oder an der im Beispiel gezeigten oder einer anderen Position vorgesehen sein.

In dem Beispiel von Figuren 3 und 4 ist eine Thermoabsicherung 40 an einem elektrischen Anschluss 23, insbesondere an einer Anschlussbuchse 24 der Magnetkupplung 20 anordenbar oder angeordnet.

In dem gezeigten Beispiel ist ein temperatursensibler Abschnitt 40a durch eine temperatursensible elektrische Sicherung 43 gebildet. Diese kann etwaig gleichzeitig einen elektrisch trennenden Abschnitt 40b bilden. In dem gezeigten Beispiel ist die temperatursensible elektrische Sicherung (Schmelzsicherung) 43 durch eine Kontaktierung für Reihenschaltung 49a mit einem Magnetkupplung-Anschlusskabel 30 verbunden. Sie kann insbesondere in einer Anschlussbuchse 24 der Magnetkupplung integriert und/oder in oder an einem Steckelement des Anschlusskabels 30 der Magnetkupplung integriert sein. Die Sicherung löst insbesondere durch eine Wärmezufuhr von außen, weiter insbesondere durch eine Wärmeübertragung von der Magnetkupplung 20 auf die Thermoabsicherung 40 aus.

Die Thermoabsicherung 40 kann einen Thermoschalter 44,45 umfassen. Der Thermoschalter kann eine beliebige Ausbildung haben. Er kann beispielsweise ein Bimetall-Schaltelement umfassen. Weiterhin kann ein Thermoschalter 44,45 nach Eintritt einer (je nach Bauart) öffnenden oder schließenden Zustandsänderung durch eine Zustandssperre in dem eingenommenen Schaltzustand gehalten sein. Die Zustandssperre kann eine beliebige Ausbildung haben und/oder auf beliebige Einflüsse reagieren. Die Zustandssperre kann insbesondere ein Mittel sein, dass das Vorliegen zumindest eines Zulassungskriteriums für das Rücksetzen überprüft.

Eine Zustandssperre kann ein Hysterese-Schaltmittel umfassen oder durch ein Hysterese-Schaltmittel gebildet sein. Eine Zustandssperre kann eine Halteschaltung umfassen oder durch eine Halteschaltung gebildet sein, die den Schaltzustand nach einem Überhitzungszustand aufrechterhält, bis eine (reguläre) Stromversorgung der Magnetkupplung 20 unterbrochen ist oder wird.

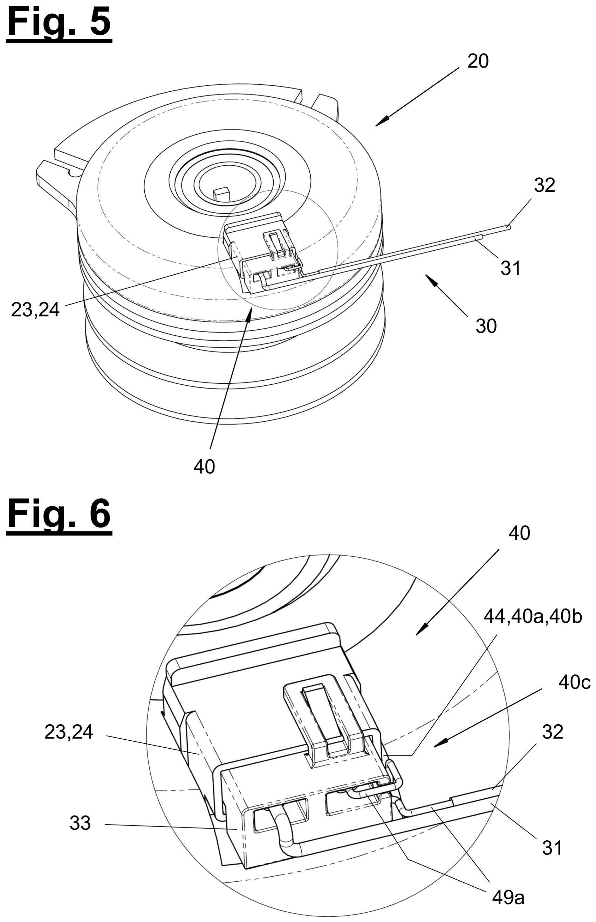

In dem Beispiel von Figuren 5 und 6 umfasst die Thermoabsicherung 40 einen im Normalfall geschlossenen Thermoschalter 44. Der Thermoschalter 44 kann insbesondere durch eine Kontaktierung für Reihenschaltung 49a verbunden sein. Wenn der Thermoschalter 44 den in im Normalfall vorliegenden geschlossenen Zustand hat, wird eine Stromversorgung und somit eine elektrische Aktuierung der Magnetkupplung 20 wirksam an dem elektrischen Anschluss 23, insbesondere der Anschlussbuchse 24 übertragen. Bei Eintritt eines Überhitzungszustands geht der Thermoschalter in den geöffneten Zustand über, sodass eine (grundlegend von außen anliegende) Stromzufuhr zu der Magnetkupplung 20 unterbrochen wird bzw. die elektrische Aktuierung der Magnetkupplung 20 aufgehoben wird.

Der Thermoschalter 24 ist bevorzugt dazu ausgebildet, sich nach Wegfall des Überhitzungszustands eigenständig zurückzusetzen, insbesondere wieder den im Normalfall vorliegenden geschlossenen Zustand einzunehmen. Der Thermoschalter 44 lässt ein Rücksetzen bevorzugt ausschließlich nach dem Wegfall des Überhitzungszustands zu. Der Thermozustand 44 lässt ein Rücksetzen bevorzugt ausschließlich zu, wenn oder sobald eine extern anliegende Stromversorgung unterbrochen wird, beispielsweise wenn eine Zündung des Rasenmähers 1 abgeschaltet ist. Der Thermoschalter 44 umfasst bevorzugt eine hierfür geeignete Halteschaltung.

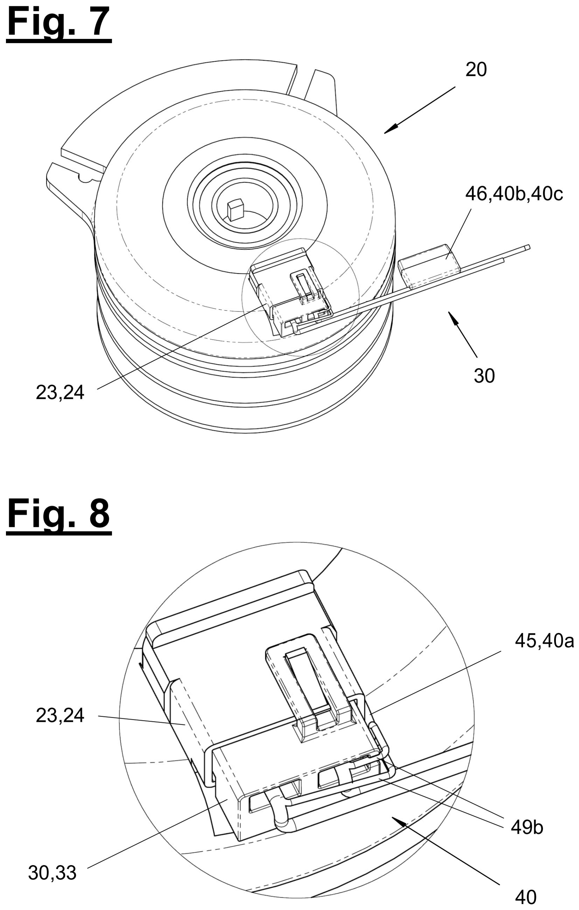

In dem Beispiel von Figuren 7 und 8 umfasst die Thermoabsicherung 40 einen im Normalfall geöffneten Thermoschalter 45. Weiterhin kann eine elektrische Überlastsicherung 46 vorhanden sein, die insbesondere auf eine Überlast in der Stromversorgung der Magnetkupplung 20 reagiert. Die Überlastsicherung 46 kann ein Bestandteil der Thermoabsicherung und/oder des Schnittwerkzeugantriebs und/oder eines Magnetkupplung-Anschlusskabels 30 sein. Alternativ oder zusätzlich kann eine Überlastsicherung 46 separat/extern vorliegen und beispielsweise ein Bestandteil des Rasenmähers 1 sein.

Der im Normalfall geöffnete Thermoschalter 45 ist bevorzugt in der Stromversorgung zu der Magnetkupplung 20 parallel geschaltet und stellt bei Eintritt einer Überhitzungsbedingung eine niederohmige Verbindung her, insbesondere einen Kurzschluss, sodass die mindestens eine elektrische Überlastsicherung 46 auslöst und die Stromversorgung unterbricht. Mit anderen Worten kann ein Thermoschalter 45 dazu ausgebildet sein, bei Eintritt eines Überhitzungszustands die Stromversorgung zu der Magnetkupplung 20 niederohmig zu überbrücken.

In dem Beispiel von Figuren 7 und 8 ist ein temperatursensibler Abschnitt 40a durch den im Normalfall geöffneten Thermoschalter 45 gebildet, während ein elektrisch trennender Abschnitt 40b und etwaig ein rücksetzender Abschnitt 40c durch eine (etwaig externe) Überlastsicherung 46 gebildet ist.

Demgegenüber ist in dem Beispiel von Figuren 5 und 6 durch einen im Normalfall geschlossenen Thermoschalter 44 einerseits ein temperatursensibler Abschnitt 40a und andererseits ein elektrisch trennender Abschnitt 40b gebildet. Optional kann weiterhin ein rücksetzender Abschnitt 40c durch den Thermoschalter 44 oder die Halteschaltung gebildet sein.

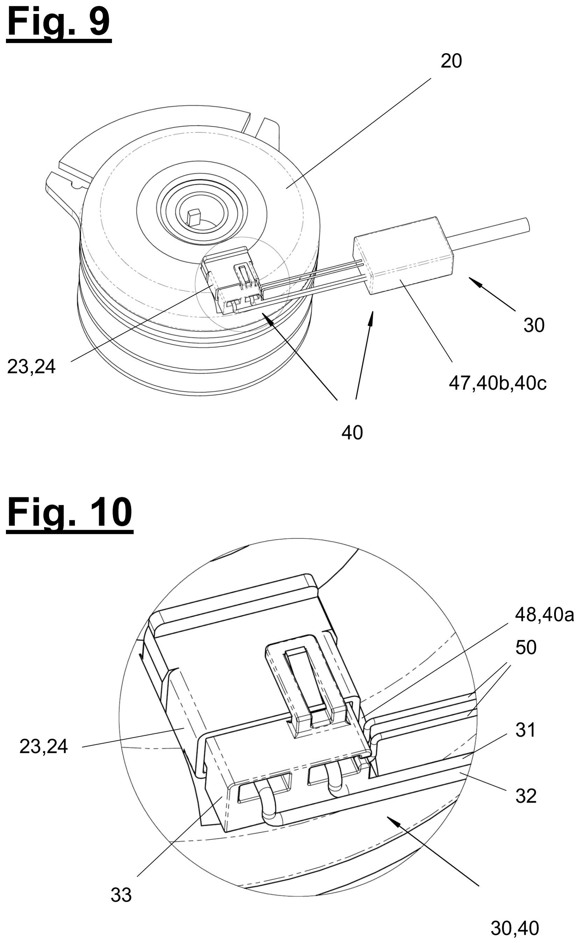

In dem Beispiel von Figuren 9 und 10 umfasst die Thermoabsicherung 40 eine Steuerung 47 und einen Temperatursensor 48. Der Temperatursensor 48 kann ein oder mehrfach vorhanden sein. Etwaig kann der Temperatursensor 48 ein externer Bestandteil sein, wobei die Steuerung 47 mit dem mindestens einen externen Temperatursensor 48 verbunden oder verbindbar ist.

Der mindestens eine Temperatursensor 48 erfasst bevorzugt die Temperatur der Magnetkupplung 20, weiter bevorzugt zumindest eine Anschluss-Temperatur und/oder eine Gehäusetemperatur und/oder eine Abtriebselementtemperatur.

In dem gezeigten Beispiel ist ein Temperatursensor 48 vorgesehen, der die Anschlusstemperatur erfasst.

Die Steuerung 47 schaltet oder steuert auf Basis der mindestens einen erfassten Temperatur die Stromversorgung der Magnetkupplung 20. Die Steuerung 47 kann ein oder mehrere Steuerabschnitte umfassen. Insbesondere ist mindestens ein Steuerabschnitt vorgesehen, der das Vorliegen eines Rücksetz-Zulassungskriteriums prüft. Alternativ oder zusätzlich kann mindestens ein Steuerabschnitt vorgesehen sein, der ein eigenständiges Rücksetzen (nur) für eine beschränkte Anzahl an Wiederholungen zulässt.

Die Steuerung 47 kann ein eigenständiger Bestandteil eines Schnittwerkzeugantriebs 3 und/oder eines Magnetkupplung-Anschlusskabels 30 sein. Alternativ oder zusätzlich kann die Steuerung 47 ein Bestandteil einer Gerätesteuerung eines Rasenmähers 1 sein oder mit einer Gerätesteuerung eines Rasenmähers 1 zusammenwirken, um bei Eintreten eines Überhitzungszustand die elektrische Aktuierung der Magnetkupplung aufzuheben und/oder eine Rücksetzung zu bewirken oder zuzulassen.

Die Steuerung 47 kann bevorzugt dazu ausgebildet sein, eigenständig oder im Zusammenwirken mit einer Gerätesteuerung einen Schaltzustand der Thermoabsicherung 40 und/oder eine Handlungsempfehlung und/oder eine Fehlermeldung auszugeben. Die Ausgabe kann auf beliebige Weise erfolgen, beispielsweise durch eine geeignete Indikation am Rasenmäher 1 und/oder durch Übermittlung einer Nachricht und/oder eines Kommandos an ein externes Gerät, insbesondere ein persönliches Mobilgerät wie ein Smartphone.

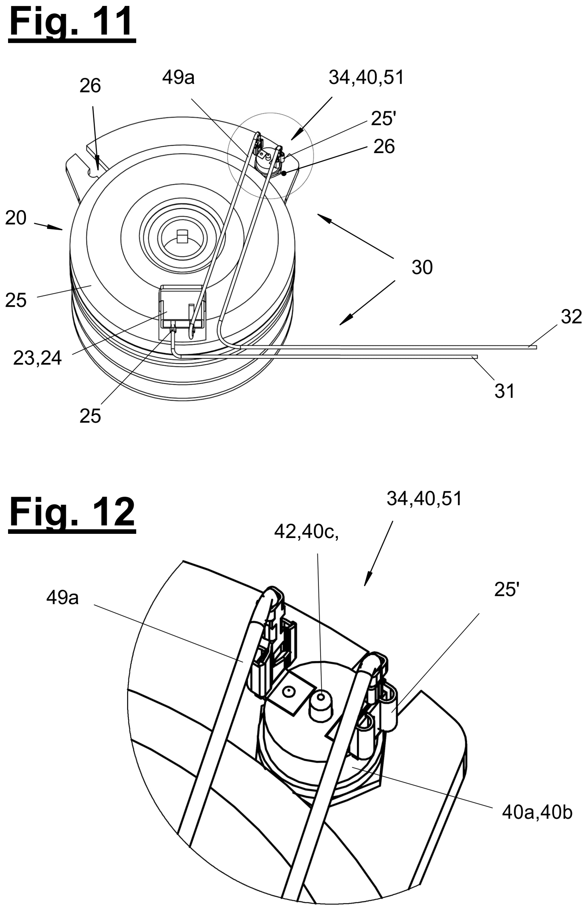

In dem Beispiel von Figuren 11 und 12 ist beispielhaft ein im Normalfall geschlossener Thermoschalter 44 gezeigt, dessen Funktionsweise ähnlich oder gleich zu der im Hinblick auf Figuren 5 und 6 erläuterten Ausführungsvariante sein kann.

Während der in Figuren 5 und 6 illustrierte Thermoschalter 44 durch ein elektronisches Bauteil, insbesondere eine integrierte Schaltung gebildet ist oder ein elektronisches Bauteil/eine integrierte Schaltung umfasst, illustriert das Beispiel von Figuren 11 und 12 einen elektrischen oder Elektromechanischen Thermoschalter, der hier insbesondere durch ein Thermo-Relais 51 gebildet ist.

Das Thermo-Relais 51 kann ein oder mehrfach vorhanden sein. Es kann mit mindestens einem elektronischen Thermoschalter 44 kombinierbar sein.

In dem Beispiel von Figuren 11 und 12 ist das Thermo-Relais 51 durch eine Kontaktierung für Reihenschaltung 49a mit einer Anschlussbuchse 24 und/oder einem Steckelement 25 eines Anschlusskabels 30 verbunden.

Das Thermo-Relais 51 kann beispielsweise einen durch Wärmezufuhr öffnenden Schalter umfassen, der beispielsweise durch ein Bimetall-Schaltelement auslöst.

Ferner kann das Thermo-Relais 51 (ebenso wie ein Thermoschalter 44,45) einen rücksetzenden Abschnitt 40c umfassen, der im gezeigten Beispiel durch einen Rücksetzmechanismus gebildet ist oder einen Rücksetzmechanismus umfasst.

In dem Beispiel von Figuren 11 und 12 sind ein temperatursensibler Abschnitt 40a und ein elektrisch trennender Abschnitt 40b durch das Thermo-Relais 51 gebildet. Das Thermo-Relais 51 kann weiterhin ein rücksetzender Abschnitt 40c sein.

Weiterhin ist in dem gezeigten Beispiel eine Thermoabsicherung an einem Gehäuse 25 der Magnetkupplung 20, weiter insbesondere an einer Aufnahme des Gehäuses 25 der Magnetkupplung und wiederum weiterhin bevorzugt an einer Befestigungsaufnahme 26 der Magnetkupplung 20 angeordnet.

Die Merkmale, Wirkungsweisen und/oder Anordnungsarten, die im Hinblick auf die Ausführungsvarianten erläutert worden sind, können in beliebiger Weise miteinander kombiniert oder gegeneinander ersetzt werden.

Ein Magnetkupplung-Anschlusskabel 30 gemäß der vorliegenden Offenbarung kann alle Merkmale, die oben für die Thermoabsicherung erläutert sind, eigenständig aufweisen. Insbesondere kann das Magnetkupplung-Anschlusskabel 30 eine eigene Thermoabsicherung 40 umfassen, die bei Eintreten eines Überhitzungszustands die elektrische Aktuierung der Magnetkupplung 20 aufhebt.

Die Thermoabsicherung 40 kann auf einen Überhitzungszustand der Magnetkupplung 20 reagieren, der insbesondere eintritt, wenn eine Temperatur der Magnetkupplung einen vordefinierten Temperaturgrenzwert überschreitet.

Die Thermoabsicherung 40 kann zumindest teilweise in einem Steckelement 25 des Magnetkupplung-Anschlusskabels 30 integriert sein.

Im vorgesehenen Montagezustand kann die Thermoabsicherung 40 bevorzugt an einer Aufnahme des Gehäuses der Magnetkupplung 20, insbesondere an einer Befestigungsaufnahme 26 und/oder an einem elektrischen Anschluss 23 der Magnetkupplung 20 angeordnet sein. Die Anordnung kann jeweils teilweise oder vollständig vorgesehen sein, insbesondere zumindest für einen temperatursensiblen Abschnitt 40a und/oder einen elektrisch trennenden Abschnitt 40b.

### Bezugszeichen

- 1: Rasenmäher
- 2: Rasenschnittwerkzeug
- 3: Schnittwerkzeugantrieb
- 4: Motorischer Antrieb / Verbrennungsmotor
- 5: Getriebe / Riementrieb
- 6: Erstes Schneidwerk
- 7: Zweites Schneidwerk
- 20: Magnetkupplung
- 21: Antriebselement
- 22: Abtriebselement
- 23: Elektrischer Anschluss
- 24: Anschlussbuchse
- 25: Gehäuse
- 26: Befestigungsaufnahme
- 30: Magnetkupplung-Anschlusskabel
- 31: Erste Leitung
- 32: Zweite Leitung
- 33: Steckelement
- 34: Adapter-Element
- 40: Thermoabsicherung
- 40a: Temperatursensibler Abschnitt
- 40b: Elektrisch trennender Abschnitt
- 40c: Rücksetzender Abschnitt
- 41: Schutzelement
- 42: Rücksetzelement / mechanischer Rücksetzschalter
- 43: Thermische Sicherung / Schmelzsicherung
- 44: Thermoschalter (Im Normalfall geschlossen)
- 45: Thermoschalter (Im Normalfall geöffnet)
- 46: Elektrische Überlastsicherung
- 47: Steuerung
- 48: Temperatursensor
- 49a: Kontaktierung für Reihenschaltung
- 49b: Kontaktierung für Parallelschaltung
- 50: Sensorleitung(en)
- 51: Thermo-Relais (normal geschlossen)

## Patentansprüche

1. Schnittwerkzeugantrieb (3) für ein Rasenschnittwerkzeug (2) eines Rasenmähers (1), wobei der Schnittwerkzeugantrieb (3) eine Kupplung umfasst, die als eine elektrisch aktuierbare Magnetkupplung (20) ausgebildet ist, **dadurch gekennzeichnet, dass** der Schnittwerkzeugantrieb (3) eine Thermoabsicherung (40) umfasst, die bei Eintreten eines Überhitzungszustands die elektrische Aktuierung der Magnetkupplung aufhebt.

2. Schnittwerkzeugantrieb nach dem vorhergehenden Anspruch, wobei die Magnetkupplung (20) eine Drehmomentübertragung zwischen einem Antriebselement (21) der Magnetkupplung und einem Abtriebselement (22) der Magnetkupplung schaltet oder steuert, wobei insbesondere das Antriebselement (21) eingangsseitig mit einem motorischen Antrieb (4) verbindbar oder verbunden ist, und/oder wobei insbesondere das Abtriebselement (22) ausgangsseitig drehmomentleitend mit dem Rasenschnittwerkzeug (2) verbindbar oder verbunden ist.

3. Schnittwerkzeugantrieb nach Anspruch 1 oder 2, wobei die Magnetkupplung (20) die Drehmomentübertragung
- Bewirkt, wenn und/oder solange die elektrische Aktuierung aktiv ist; UND/ODER
- unterbindet, wenn und/oder solange die elektrische Aktuierung inaktiv ist.

4. Schnittwerkzeugantrieb nach einem der vorhergehenden Ansprüche, wobei die Magnetkupplung (20) eine erste Kupplungseinheit, insbesondere eine erste Kupplungsscheibe umfasst, die mit dem Antriebselement (21) verbunden ist, und eine zweite Kupplungseinheit, insbesondere eine zweite Kupplungsscheibe, die mit dem Abtriebselement (22) verbunden ist, und wobei die Kupplungseinheiten durch die elektrische Aktuierung zueinander in Eingriff bringbar sind.

5. Schnittwerkzeugantrieb nach einem der vorhergehenden Ansprüche, wobei die Thermoabsicherung (40) auf einen Überhitzungszustand der Magnetkupplung (20) reagiert, der insbesondere eintritt, wenn eine Temperatur der Magnetkupplung, weiter insbesondere eine AnschlussTemperatur oder eine Gehäusetemperatur der Magnetkupplung (20) einen vordefinierten Temperaturgrenzwert überschreitet.

6. Schnittwerkzeugantrieb nach einem der vorhergehenden Ansprüche, wobei die Thermoabsicherung (40) einen temperatursensiblen Abschnitt (40a) und insbesondere weiterhin einen elektrisch trennenden Abschnitt (40b) und/oder einen rücksetzenden Abschnitt (40c) aufweist.

7. Schnittwerkzeugantrieb nach einem der vorhergehenden Ansprüche, wobei die Thermoabsicherung zumindest teilweise an einem elektrischen Anschluss (23) der Magnetkupplung (20) angeordnet ist, insbesondere
- in eine Anschlussbuchse (24) der Magnetkupplung integriert ist; UND/ODER
- in einem Steckelement (25) eines Anschlusskabels (30) der Magnetkupplung integriert ist; UND/ODER
- in ein Adapter-Element (34) integriert ist, das zwischen einer Anschlussbuchse (24) der Magnetkupplung (20) und einem Anschlusskabel (30) anordenbar oder angeordnet ist.

8. Schnittwerkzeugantrieb nach einem der vorhergehenden Ansprüche, wobei die Thermoabsicherung (40) zumindest teilweise an einer Aufnahme des Gehäuses der Magnetkupplung angeordnet ist, insbesondere an einer Befestigungsaufnahme (26).

9. Schnittwerkzeugantrieb nach einem der vorhergehenden Ansprüche, wobei die Thermoabsicherung (40) nach Eintritt des Überhitzungszustands
- dauerhaft die elektrische Aktuierung unterbindet, wobei insbesondere eine permanente Zustandsänderung der Thermoabsicherung (40) eintritt, weiter insbesondere eine zumindest teilweise Zerstörung eines Schutzelements (41);
- temporär die elektrische Aktuierung unterbindet, wobei die Thermoabsicherung (40) insbesondere durch manuelle Betätigung eines Rücksetzelements (42) rücksetzbar ist, wobei weiter insbesondere ein Rücksetzen ausschließlich nach dem Wegfall des Überhitzungszustands zugelassen ist und/oder wirksam wird;
- temporär die elektrische Aktuierung unterbindet, wobei sich die Thermoabsicherung (40) insbesondere nach Wegfall des Überhitzungszustands eigenständig zurücksetzt, weiter insbesondere für eine beschränkte Anzahl an Wiederholungen eigenständig rücksetzt, UND/ODER weiter insbesondere bei Vorliegen eines zusätzlichen Rücksetz-Zulassungskriteriums.

10. Schnittwerkzeugantrieb nach einem der vorhergehenden Ansprüche, wobei die Thermoabsicherung
- eine temperatursensible elektrische Sicherung (43) umfasst; ODER
- einen im Normalfall geschlossenen Thermoschalter (44) umfasst, der bei Eintritt der Überhitzungsbedingung eine Stromzufuhr zu der Magnetkupplung (20) unterbricht; ODER
- einen im Normalfall geöffneten Thermoschalter (45) umfasst, der in der Stromversorgung zu der Magnetkupplung (20) parallel geschaltet ist und bei Eintritt der Überhitzungsbedingung eine niederohmige Verbindung herstellt, insbesondere einen Kurzschluss, sodass eine elektrische Überlastsicherung (46) auslöst und die Stromversorgung unterbricht; ODER
- eine Steuerung (47) und einen Temperatursensor (48) umfasst, wobei der Temperatursensor (48) die Temperatur der Magnetkupplung (20) erfasst und die Steuerung (47) auf Basis dieser erfassten Temperatur die Stromversorgung der Magnetkupplung (20) schaltet oder steuert.

11. Rasenschnittwerkzeug (2) für einen Rasenmäher, umfassend einen Schnittwerkzeugantrieb (3) nach einem der vorhergehenden Ansprüche.

12. Magnetkupplung-Anschlusskabel (30) zur elektrischen Stromversorgung einer Magnetkupplung (20) eines Schnittwerkzeugantriebs (3) für einen Rasenmäher (1), wobei das Magnetkupplung-Anschlusskabel (30) eine Thermoabsicherung (40) umfasst, die bei Eintreten eines Überhitzungszustands die elektrische Aktuierung der Magnetkupplung (20) aufhebt.

13. Magnetkupplung-Anschlusskabel (30) nach dem vorhergehenden Anspruch, wobei die Thermoabsicherung (40) auf einen Überhitzungszustand der Magnetkupplung (20) reagiert, der insbesondere eintritt, wenn eine Temperatur der Magnetkupplung, weiter insbesondere eine Anschluss-Temperatur oder eine Gehäusetemperatur der Magnetkupplung (20) einen vordefinierten Temperaturgrenzwert überschreitet.

14. Magnetkupplung-Anschlusskabel (30) nach einem der vorhergehenden Ansprüche, wobei die Thermoabsicherung zumindest teilweise in einem Steckelement (25) des Magnetkupplung-Anschlusskabels (30) integriert ist, und/oder wobei die Thermoabsicherung (40) an einer Aufnahme des Gehäuses der Magnetkupplung angeordnet ist, insbesondere an einer Befestigungsaufnahme (27).

15. Rasenmäher umfassend einen Schnittwerkzeugantrieb (3) nach einem der vorhergehenden Ansprüche 1 bis 10, und/oder ein Rasenschnittwerkzeug (2) nach Anspruch 11, und/oder ein Magnetkupplung-Anschlusskabel (30) nach einem der vorhergehenden Ansprüche 12 bis 14, optional weiterhin umfassend einen motorischen Antrieb (4) und/oder eine Gerätesteuerung.
